# EUROPEAN PATENT SPECIFICATION

(11) **EP 3 037 656 B1**
(45) Date of publication and mention of the grant of the patent: **14.12.2016**
(21) Application number: 14199681.9
(22) Date of filing: 22.12.2014
(51) Int. Cl.: F03D 1/06

(54) **Rotor blade with vortex generators**
Rotorblatt mit Wirbelerzeugern
Pale de rotor à générateurs de vortex

(43) Date of publication of application: 29.06.2016
(73) Proprietor: Siemens Aktiengesellschaft, 80333 München (DE)
(72) Inventor: Enevoldsen, Peder Bay, 7100 Vejle (DK); Fuglsang, Peter, 7100 Vejle (DK); Gonzalez, Alejandro Gomez, 8000 Aarhus (DK)

(56) References cited:
- US-A1- 2009 068 018
- US-A1- 2010 008 787
- US-A1- 2011 229 321

## Description

The present invention relates to a wind turbine and to a rotor blade of a wind turbine. In particular, the present invention relates to the question how a rotor blade and a wind turbine comprising such a rotor blade could be ameliorated with respect to aerodynamic and structural aspects.

It is known from the field of aircrafts to provide vortex generators to the wing of an aircraft, i.e. an airplane. A vortex generator is a simple means to improve the aerodynamic efficiency of the wing under certain conditions. A vortex generator is an aerodynamic add-on which can, for example, be mounted to an already finished wing or which can be incorporated into the manufacturing process of a new wing.

It is also known that vortex generators may have a beneficial effect for rotor blades of a wind turbine. The international patent application WO 2006/122547 A1, for instance, discloses a rotor blade of a wind turbine with turbulence generating means at the leeward surface side, i.e. the suction side, of the rotor blade.

Another example of the use of vortex generators in the context of wind turbine rotor blades is the patent application US 2009/0068018 A1. Therein, various designs and configurations of vortex generators on wind turbine rotor blades are disclosed.

Conventional vortex generators, have amongst others the following technical effects: Delay of stall on a rotor blade due to re-energization of the boundary layer. The boundary layer is the layer of airflow which is adjacent to the surface of the rotor blade. During operation of the wind turbine, the delay of stall is highly advantageous as, thus, the wind turbine can be operated at a larger range of angles of attack. The angle of attack refers to the angle between the chord line of the rotor blade and the direction of the incoming airflow which is impinging on the rotor blade.

Another technical effect of conventional vortex generators is the increase of the lift of the rotor blade. This may be particularly advantageous if the lift coefficient of the rotor blade is already decreased, for example due to soiling of the rotor blade. The lift coefficient of a rotor blade characterizes the lift that can be generated if an airflow is impinging on the rotor blade at a certain angle of attack. The lift coefficient is in general, amongst other parameters, dependent whether the rotor blade is clean or soiled. Soiling of the rotor blade refers to a rough surface which may be caused by bugs, insects, dust or the like. Soiling frequently occurs at the leading edge of the rotor blade. In summary, in the case of a soiled rotor blade, an increase of the lift coefficient is typically perceived as advantageous for all relevant angles of attack.

However, the increase of the lift coefficient may also be disadvantageous if it augments the maximum lift of the rotor blade towards a value which is higher than the maximum lift of the rotor blade without vortex generators. This is, for example, the case for a clean rotor blade where the provision of vortex generators augments the maximum lift. In this context, the increase of the maximum lift is typically perceived as disadvantageous because loading of the rotor blade is increased and, thus, requirements for the structural stability of the rotor blade may have to be reviewed.

This drawback is present at conventional vortex generators and might even be enhanced if multiple vortex generators are aligned in a spanwise or chordwise direction as disclosed in the mentioned patent application US 2009/0068018 A1.

It would thus be desirable to provide a rotor blade of a wind turbine which is configured such that it overcomes, at least partially, the described disadvantages of conventional rotor blades of a wind turbine having conventional vortex generators.

This objective is solved by the independent claims. The dependent claims describe advantageous developments and modifications.

According to the invention there is provided a rotor blade of a wind turbine which comprises a main vortex generator which is configured to generate a main vortex and a secondary vortex generator, which is configured to generate a second vortex. The height of the main vortex generator is greater than the height of the secondary vortex generator. Additionally, the main vortex generator and the secondary vortex generator are configured and arranged such with regard to each other that
a) for a boundary layer thickness which is smaller than the height of the secondary vortex generator, the secondary vortex generator reduces, in particular neutralizes, the impact of the main vortex generator on the lift of the rotor blade, and
b) for a boundary layer thickness which is larger than the height of the secondary vortex generator, the lift of the rotor blade is substantially unaffected by the presence of the secondary vortex generator.

In principle, a vortex generator has to be understood as a device or an add-on which is suitable to generate a vortex. The inventive rotor blade comprises at least two vortex generators: A main vortex generator and a secondary vortex generator. The height of the two vortex generators is different. The height refers to the extension of the vortex generator perpendicular to the surface of the rotor blade at the specific location of the rotor blade where the vortex generator is mounted to. In other words, the vortex generators projects away from the surface of the rotor blade and the height of the vortex generators is referred to as the minimum distance of the most distal point of the vortex generator to the surface of the rotor blade. It is noted that the difference in height between the main vortex generator and the secondary vortex generator is meant to be a difference in the height exceeding 10% of the height of the main vortex generator. In other words, naturally occurring slight differences in the height which are, for example, caused by manufacturing deviations are not sufficient as being qualified for a height difference between the main and the secondary vortex generator as understood in this patent application. In particular, the height of the main vortex generator is more than the double of the height of the secondary vortex generator.

A key aspect of the present invention is that the main vortex generator and the secondary vortex generator are chosen such that the secondary vortex generator cancels out, or at least reduces, the effect or impact of the main vortex generator for small boundary layer thicknesses; for large boundary layer thicknesses, however, the secondary vortex generator is "invisible", i.e. inactive. Consequently, the effect of the vortex generator arrangement comprising the main vortex generator and the secondary vortex generator depends on the boundary layer thickness.

The boundary layer refers to the flow layer which is adjacent to the surface of the rotor blade, and in which the velocity of the airflow varies from its so-called outer flow velocity down to a value of zero at the surface. In particular, the velocity of the airflow increases, e.g. monotonically, for increasing distances away from the surface. The thickness of the boundary layer is defined such that the velocity of the airflow reaches 99% of the free-stream velocity of the airflow. Typical boundary layer thicknesses of a rotor blade of a modern wind turbine are in the range of a few millimeters up to few centimeters. These values represent exemplary values for a rotor blade having a maximum chord length of, for example, four meters and a length in spanwise direction of fifty meters. Note that the thickness of the boundary layer depends amongst other parameters on the angle of attack. The thickness of the boundary layer also depends whether the rotor blade is clean or soiled.

The secondary vortex generator is arranged and prepared for reducing the impact of the main vortex generator on the lift of the rotor blade selectively for a boundary layer thickness which is smaller than the height of the secondary vortex generator. Note, however, that even for a boundary layer thickness, which is smaller than the height of the secondary vortex generator, it could turn out that the main vortex generator still has a certain impact, i.e. activity, on the lift of the rotor blade. Likewise, even for a boundary layer thickness, which is larger than the height of the secondary vortex generator, it could turn out that the impact of the main vortex generator is still reduced by the secondary vortex generator, although the secondary vortex generator is fully submerged within the boundary layer. A limit height, at which the vortex generators are aerodynamically ineffective, is also referred to as the viscous sub-layer of the rotor blade.

In an embodiment of the invention, the main vortex generator and the secondary vortex generator are located on the suction side of the rotor blade.

A placement of the vortex generators on the suction side of the rotor blade is advantageous because the positive impact of the vortex generators of the main stall is more relevant at the suction side of the rotor blade compared to the pressure side of the rotor blade.

In another embodiment of the invention, the main vortex generator and the secondary vortex generator are located substantially at the same spanwise position of the rotor blade.

The spanwise position relates to the span of the rotor blade. The span of the rotor blade extends between the root portion of the rotor blade and the tip portion of the rotor blade. The span of the rotor blade is also referred to as its longitudinal axis. Regarding rotor blades which are configured to be pitched about a pitch axis when they are once mounted to a hub of the wind turbine, the span might advantageously be substantially equivalent to the pitch axis of the rotor blade. However, in the case of a curved or swept rotor blade, the span follows the shape of the rotor blade and thus is curved or swept, too.

In another embodiment of the invention, the distance between the main vortex generator and the secondary vortex generator is smaller than 10%, in particular smaller than 5%, even more particularly smaller than 2% of the chord length of the rotor blade at the spanwise position of the main vortex generator.

An advantage of a relatively small distance between the main vortex generator and the secondary vortex generator is that the impact of the secondary vortex generator on the main vortex generator is strong. In other words, the distance between the secondary vortex generator and the main vortex generator has to be small enough such that in the case, wherein the secondary vortex generator is substantially out of the boundary layer, the secondary vortex generator has an impact on the aerodynamic efficiency of the main vortex generator.

In the following, advantageous dimensions of the main vortex generator are given.

A first aspect relates to the positioning of the main vortex generator with regard to its chordwise and spanwise location on the surface of the rotor blade. The main vortex generator may be positioned at any position along the whole span of the rotor blade. In other words, any position between the root of the rotor blade and the tip of the rotor blade is suitable. Regarding the chordwise position, a location of the main vortex generator between 5% and 60% of the chord length of the rotor blade is preferred. Note that the given values refer to positions determined along the chord line, as measured from the leading edge of the rotor blade. Also note - as the chord length of a rotor blade typically varies along the span - that the given values refer to the chord length at the spanwise position, where the main vortex generator is mounted.

In a first preferred embodiment, the main vortex generator is located between 50% and 100% of the span of the rotor blade, as measured from the root of the rotor blade. Regarding its chordwise position, the main vortex generator is located between 20% and 55% of the chord length of the rotor blade, as measured from the leading edge of the rotor blade at the spanwise position of the main vortex generator.

In a second preferred embodiment, the main vortex generator is located between 5% and 50% of the span of the rotor blade, as measured from the root of the rotor blade. Regarding its chordwise position, the main vortex generator is located between 5% and 40% of the chord length of the rotor blade, as measured from the leading edge of the rotor blade at the spanwise position of the main vortex generator.

In a third preferred embodiment, the first and second embodiments are combined, thus resulting in a plurality of main vortex generators of which a first portion has the characteristics of the first embodiment and a second portion has the characteristics of the second embodiment. In other words, a rotor blade is provided comprising at least a first main vortex generator at a spanwise position between 5% and 50% and a chordwise position between 5% and 40%, and at least a second main vortex generator at a spanwise position between 50% and 100% and a chordwise position between 20% and 55%.

A second aspect relates to the maximum height of the main vortex generator. The height of the main vortex generator refers to the extension of the main vortex generator in a direction perpendicular to the surface of the rotor blade at the position on the surface where the main vortex generator is mounted to the rotor blade. As in general, the main vortex generator has a shape with a varying height, e.g. it has an increasing height as seen from the upstream end to the downstream end of the main vortex generator, the maximum height refers to maximum value of the height of the main vortex generator.

Preferably, the main vortex generator has a maximum height between 0.2% and 4%, most preferably between 0.3% and 1%, of the chord length of the rotor blade. Likewise, the secondary vortex generator preferably has a maximum height between 0.1% and 1%, most preferably between 0.1% and 0.5%, of the chord length of the rotor blade.

In another embodiment of the invention, the rotor blade comprises a further main vortex generator and a further secondary vortex generator.

Thus, the main vortex generator and the further main vortex generator build a pair of main vortex generators. Likewise, the secondary vortex generator and the further secondary vortex generator build a pair of secondary vortex generators.

It is quite common both in the field of aircrafts as well as in the field of wind turbine rotor blades to arrange vortex generators in pairs. Note that in principle a vortex generator is also able to work and generate vortices if it is present as such. However, the efficiency of the vortex generators is increased if they exist as a pair.

Note that the advantageous position and dimensions, which were mentioned for the main vortex generator, preferably also apply for the further main vortex generator. In particular, both the main vortex generator and the further main vortex generator have a similar position and dimensions.

Likewise, advantageously, the position and dimensions, which were mentioned for the secondary vortex generator, preferably also apply for the further secondary vortex generator. In particular, both the secondary vortex generator and the further secondary vortex generator have a similar position and dimensions.

In another embodiment of the invention, the main vortex generator and the further main vortex generator diverge from each other in chordwise direction from the leading edge section of the rotor blade to the trailing edge section of the rotor blade.

This divergence of the main vortex generator pair has to be understood such that the minimum distance between the main vortex generator and the further main vortex generator is smaller at the upstream end of the main vortex generators compared to the downstream end of the main vortex generators.

An advantage of having a pair of main vortex generators which diverge from each other regarding their shapes is that the vortices that are generated by the vortex generators do not interfere and impede each other to such extent as it would possibly be the case if they converged relative to each other.

Alternatively, the main vortex generator and the further main vortex generator may also converge to each other in chordwise direction from the leading edge section of the rotor blade to the trailing edge section of the rotor blade. Note that the technical effect of the invention in principle works with both diverging and converging main vortex generator pairs.

In an embodiment of the invention, the secondary vortex generator and the further secondary vortex generator converge to each other in chordwise direction from the leading edge section of the rotor blade to the trailing edge section of the rotor blade.

Alternatively, it might also be advantageous if the pair of secondary vortex generators diverge from each other in chordwise direction from the leading edge section of the rotor blade to the trailing edge section of the rotor blade.

The fact that the pair of secondary vortex generators converges to each other or diverges from each other has an impact whether the generated vortices rotate clockwise relative to each other or counter-clockwise relative to each other. Depending on the specific design and purpose of the rotor blade, either a clockwise or a counter-clockwise rotation of the vortices is preferable.

In summary, both the main vortex generator pair may either converge or diverge and the secondary vortex generator pair may either converge or diverge. In principle, all combinations - a converging main vortex generator pair and a converging secondary vortex generator pair; a converging main vortex generator pair and a diverging secondary vortex generator pair; a diverging main vortex generator pair and a converging secondary vortex generator pair; and a diverging main vortex generator pair and a diverging secondary vortex generator pair - work in principle and are able to lead to the inventive technical effect as described above. Note that due to the further options of placing the main vortex generator pair upstream with regard to the secondary vortex generator pair or placing the secondary vortex generator pair upstream with regard to the main vortex generator pair (these options will be described in more detail further below), even more combinations are possible in principle.

In another embodiment of the invention, the secondary vortex generator is located upstream of the main vortex generator. Alternatively, the secondary vortex generator is located downstream of the main vortex generator.

Again, both configurations are possible and seem promising depending on the concrete realization of the rotor blade of which the vortex generators are a part of and for the concrete operation of the rotor blade.

In another embodiment of the invention, the main vortex generator and the secondary vortex generator merge into one another, such that the main vortex generator and the secondary vortex generator build one single device.

In principle, both the main vortex generator and the secondary vortex generator may be designed as two separate pieces. Thus, they do not have a physical link to each other except that they are mounted on the same surface portion of the rotor blade. However, it might, in a possible embodiment of the invention, be advantageous if the two vortex generators merge. This might be advantageous in terms of aerodynamic efficiency as no edges or rims or interruptions are present from the upstream end of the arrangement of the vortex generators to the downstream end of the arrangement.

In another embodiment of the invention, the secondary vortex generator is configured as a vortex deflector for guiding the main vortex away from the surface of the rotor blade.

This vortex deflector may for example be shaped as a rake.

The invention is also directed to a wind turbine comprising at least one rotor blade as described in one of the embodiments above.

A wind turbine is referred to as a device that converts kinetic energy from the wind into rotational energy. Subsequently, the rotational energy is used to generate electricity. A wind turbine is also denoted a wind power plant.

Embodiments of the invention are now described, by way of example only, with reference to the accompanying drawings, of which:
- Figure 1: shows a wind turbine;
- Figure 2: shows a rotor blade of a wind turbine;
- Figure 3: shows a perspective view of a part of a rotor blade of a wind turbine with vortex generators;
- Figure 4: shows a cross sectional view of the airfoil profile of the rotor blade;
- Figure 5: shows different boundary layer thicknesses;
- Figure 6A: shows the lift coefficient depending on the angle of attack for different rotor blades;
- Figure 6B: shows the respective ratios of lift to drag for the rotor blades as shown in Figure 6A;
- Figure 7: shows a first embodiment of the invention;
- Figure 8: shows a second embodiment of the invention;
- Figure 9: shows a third embodiment of the invention;
- Figure 10: shows a fourth embodiment of the invention; and
- Figure 11: shows a fifth embodiment of the invention.

The illustration in the drawings is in schematic form. It is noted that in different figures, similar or identical elements may be provided with the same reference signs.

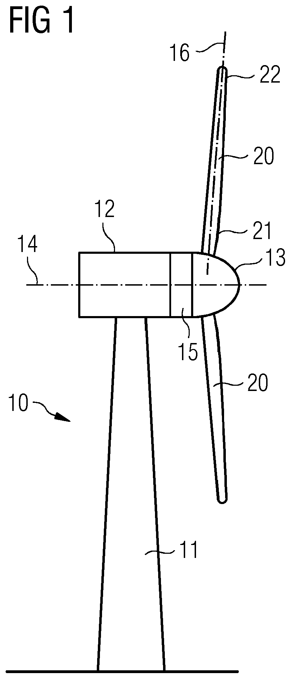

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 20 (of which two rotor blades 20 are depicted in Figure 1). The hub 13 is mounted rotatable with regard to the nacelle 12 by means of a main bearing. The hub 13 is mounted rotatable about a rotor axis of rotation 14.

The wind turbine 10 furthermore comprises a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the rotor via a gearbox. This type of wind turbine is referred to as a geared wind turbine.

The generator 15 is accommodated within the nacelle 12. It comprises the rotor and a stator. The generator 15 is arranged and prepared for converting the rotational energy from the rotor into electrical energy.

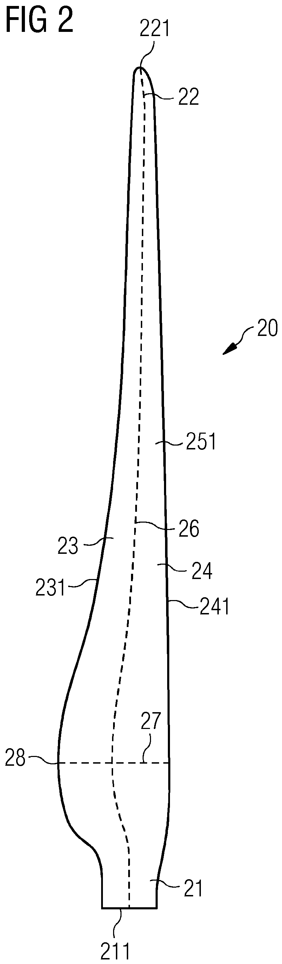

Figure 2 shows a rotor blade 20 of a wind turbine. The rotor blade 20 comprises a root section 21 with a root 211 and a tip section 22 with a tip 221. The root 211 and the tip 221 are virtually connected by the span 26 which follows the shape of the rotor blade 20. If the rotor blade were a rectangular shaped object, the span 26 would be a straight line. However, as the rotor blade 20 features a varying thickness, the span 26 is slightly curved or bent as well. Note that if the rotor blade 20 was bent itself, then the span 26 would be bent, too.

The rotor blade 20 furthermore comprises a leading edge section 24 with a leading edge 241 and a trailing edge section 23 with a trailing edge 231.

The trailing edge section 23 surrounds the trailing edge 231. Likewise, the leading edge section 24 surrounds the leading edge 241.

At each spanwise position, a chord line 27 which connects the leading edge 241 with the trailing edge 231 can be defined. Note that the chord line 27 is perpendicular to the span 26. The shoulder 28 is defined in the region where the chord line comprises a maximum chord length.

Furthermore, the rotor blade 20 can be divided into an inboard section which comprises the half of the rotor blade 20 adjacent to the root section 21 and an outboard section which comprises the half of the rotor blade 20 which is adjacent to the tip section 22.

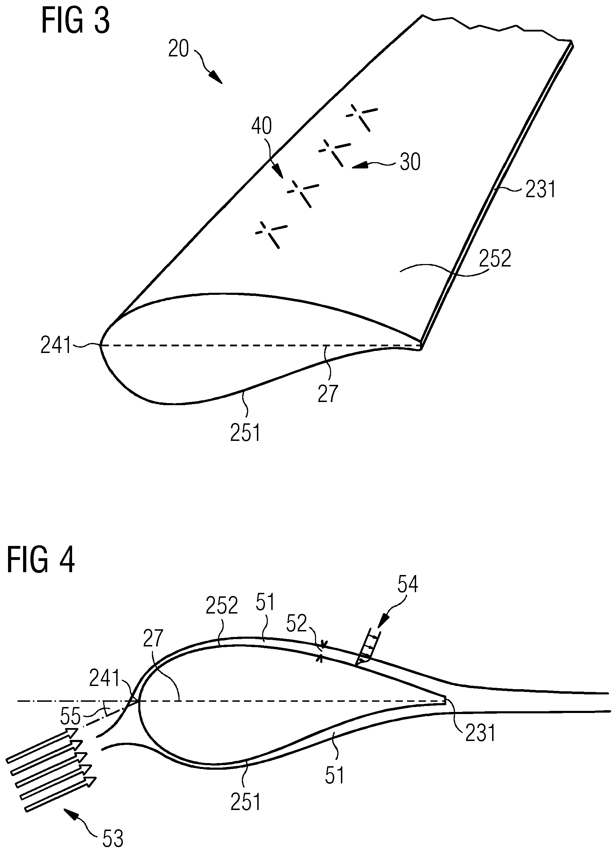

Figure 3 shows a perspective view of a part of a rotor blade 20. The suction side 252 can be viewed and is opposed to the pressure side 251. As the rotor blade 20 is cut in a cross sectional cut in Figure 3, the chord line 27, which is the direct and straight line between the leading edge 241 and the trailing edge 231, can be seen. Note that the trailing edge 231 comprises a certain extension in the direction which is perpendicular to the chord line 27. This extension may be in the range of a few millimeters for a fifty meter long rotor blade. If this extension is very prominent, exemplarily comprising several centimeters, the trailing edge is also referred to as a flat back trailing edge.

It is noted that the vortex generator arrangement on the suction side 252 of the rotor blade 20 comprises four groups of vortex generators. Each group comprises one pair of main vortex generators 30 and one pair of secondary vortex generators 40. The secondary vortex generators converge to each other in a chordwise direction from the leading edge 241 to the trailing edge 231, while the main vortex generators 30 diverge from each other in the chordwise direction from the leading edge 241 to the trailing edge 231. The groups of vortex generators are arranged along a line that is substantially parallel to the span of the rotor blade 20.

Figure 4 illustrates the boundary layer 51 which envelopes the surface of the rotor blade. The incoming airflow 53, which is impinging on the rotor blade in an angle, that is referred to as the angle of attack 55, can be seen. The boundary layer thickness 52 varies along chordwise positions of the rotor blade. Note that Figure 4 only gives an example of relative boundary layer thickness variations and that many alternatives and variations are possible in a concrete situation. The boundary layer thickness 52 refers to the perpendicular extension relative to the surface of the rotor blade and the distance at which the velocity of the airflow 53 reaches a value of 99% of the free stream airflow velocity. This can be visualized by a velocity profile of the airflow 54. A high degree of aerodynamic efficiency and lift can be achieved if the airflow is attached, i.e. sticked, to the surface of the rotor blade as it is shown in Figure 4. If, however, the boundary layer is detached at a certain range of chordwise positions, for example for every chordwise position greater than 70% as determined from the leading edge 241 of the rotor blade, this detachment of the rotor blade is also referred as stall. Stall typically reduces the lift coefficient of the rotor blade significantly. Note that the properties of the boundary layer 51 heavily depend on the angle of attack 55 at which the airflow 53 impinges on the rotor blade.

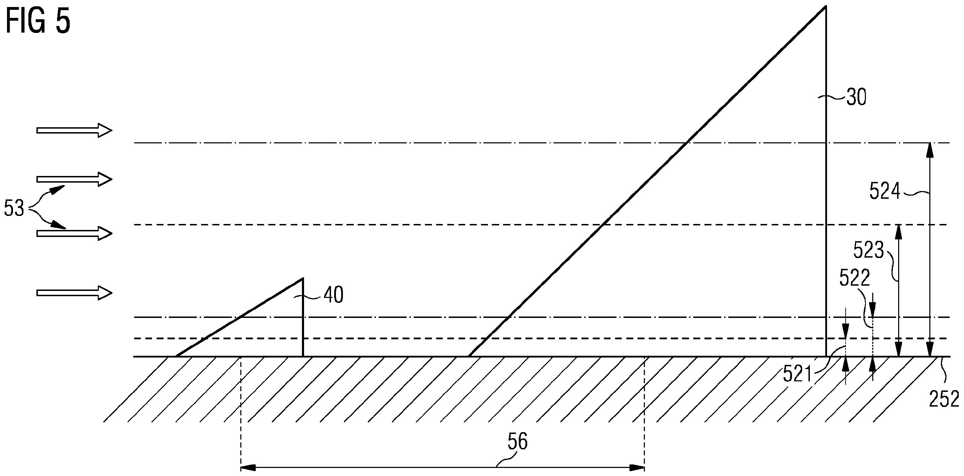

In Figure 5, the inventive concept is explained by the help of different scenarios regarding the boundary layer thickness which envelopes the surface of the rotor blade. Figure 5 shows a main vortex generator 30 and a secondary vortex generator 40, both of them attached to the suction side 252 of a rotor blade. If airflow 53 flows along the surface of the suction side 252, a boundary layer can be attributed to the airflow.

A first boundary layer thickness 521 refers to a clean rotor blade operating at small angles of attack. In contrast, the reference sign 522 refers to a second boundary layer thickness which is greater than the boundary layer thickness 521. The second boundary layer thickness 522 refers to a clean rotor blade operating at a large angle of attack. However, even for large angles of attack the secondary vortex generator 40 projects out of the boundary layer and thus is aerodynamically active. In other words, the secondary vortex generator 40 has an impact on the main vortex generator 30, which is arranged in a distance 56 downstream of the secondary vortex generator 40.

The height of the main vortex generators 30 is significantly larger than the height of the secondary vortex generator 40.

Figure 5 also shows two other scenarios of a rotor blade leading to different thicknesses of the boundary layer. The reference sign 523 refers to a third boundary layer thickness, referring to a soiled rotor blade operated at small angles of attack. In contrary, the reference sign 524 refers to the same soiled rotor blade now operated at large angles of attack. Note that for both angles of attack, the secondary vortex generator 40 is fully submerged in the boundary layer.

A key aspect of the invention, which is visualized in Figure 5, is that by choosing appropriate and customized dimensions and distances of the main vortex generator and the secondary vortex generator, a configuration is possible wherein for each possible and relevant angle of attack in the case of a soiled rotor blade the secondary vortex generator 40 is fully submerged in the boundary layer; while for any relevant angle of attack of a clean rotor blade the secondary vortex generator 40 sticks out of the boundary layer. This translates into the result that the main vortex generator 30 is effective as soon as the rotor blade is soiled and becomes ineffective as long as the rotor blade is clean. Thus, the invention provides a rotor blade which has a main vortex generator which as such can be "switched on or off" by means of an upstreamly positioned secondary vortex generator which is either effective or ineffective depending on whether the rotor blade is soiled or clean. This is advantageous because in the case of a clean rotor blade the maximum lift coefficient is already high and a further increase of the maximum lift coefficient would require higher structural stability requirements. However, for a soiled rotor blade, the lift coefficient is naturally already decreased such that an increase of the lift of the rotor blade by means of the main vortex generator is desirable. Note that this explanation refers to the specific case of an arrangement of vortex generators comprising the secondary vortex generator 40 and the main vortex generator 30 as it is depicted in Figure 5.

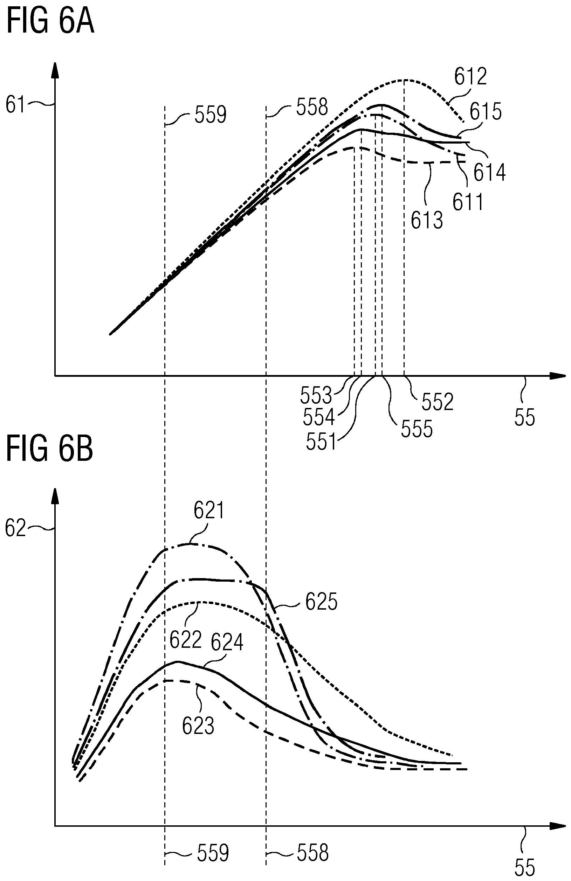

Figures 6A and 6B explain the technical effect of the inventive vortex generators on the lift curve and the lift-to-drag ratio curve, compared to conventional vortex generators and compared to no vortex generators. In particular, Figures 6A and 6B show the lift coefficient 61 and the lift to drag ratio 62, each depending on the angle of attack 55. Note that any vortex generator typically has a certain drag. In other words, it contributes to the overall drag of the rotor blade. Normally, an increase of the drag of the rotor blade is not desirable, as it lowers the efficiency of the rotor blade.

Figure 6A shows different lift curves for a rotor blade. A first lift curve 611 shows a monotonic increase for the range of small to medium angles of attack. This means that in a broad range for small and medium angles of attack, the lift coefficient 61 increases with increasing angles of attack. In practice, this means that the lift that is generated by the rotor blade increases by increasing angles of attack which might either be caused by changing angles of the incoming wind or by intentionally pitching the rotor blade such that the incoming wind impinges at a different angle on the rotor blade. The lift coefficient 61 increases until a maximum is reached. The angle of attack at which the maximum is reached is referred to with the reference sign 551. A decrease in the lift coefficient indicates occurrence of stall at the rotor blade.

It is a general trend that the lift coefficient increases monotonically between small and medium angles of attack until it reaches a maximum lift. Subsequently, between medium and large angles of attack, the lift coefficient typically decreases. The first curve 611 refers to a typical lift curve of a clean rotor blade without vortex generators. By providing conventional vortex generators to a clean rotor blade, the lift curve shifts to a second lift curve 612.

One effect of this shift is the delay of stall. In other words, the angle of attack at which stall occurs is shifted to a higher value 552. Thus, the rotor blade can be operated with an attached boundary layer in a larger range of angles of attack 55.

Another effect of the shift of the lift curve is that the lift coefficient as such is shifted to higher values. Thus, the absolute value of the lift coefficient at its maximum is increased compared to the first lift curve referring to the same rotor blade without any vortex generators. This increase of the maximum lift coefficient is generally accompanied by an increase in the extreme or maximum loading of the rotor blade which might be problematic.

The lift curves 613 and 614 represent the same rotor blade with a soiling at its surface. Soiling of the rotor blade refer to an additional layer at surface sections and/or to erosion of the existing rotor blade surface. The rotor blade is typically soiled at the leading edge section, reaching potentially downstream until the mid position respective to the chord length of the rotor blade. Soiling of the rotor blade causes the overall lift curve to decrease. This is valid for the case of a soiled rotor blade without vortex generators, confer reference sign 613, and is valid for the case of a soiled rotor blade with conventional vortex generators, which is represented by the fourth lift curve 614. Overall decrease of the lift coefficient is generally undesired as it lowers the lift to drag ratio and, thus, the energy that can be harvested by the rotor blade and the wind turbine as a whole.

A clean rotor blade with inventive vortex generators is represented by the fifth lift curve 615. The clean rotor blade features a relatively thin boundary layer such that the secondary vortex generator is active and reduces the impact of the main vortex generator on the lift of the rotor blade. This can be clearly seen in Figure 6A. The lift curve of the clean rotor blade with the inventive vortex generator is shifted to lower lift coefficient values compared to the second lift curve 612 referring to the clean rotor blade with conventional vortex generators.

In the case of a soiled rotor blade, a thick boundary layer can be assumed such that the secondary vortex generator is fully submerged into the boundary layer leading to a substantially unaffected main vortex generator. Thus, the lift curve of the soiled rotor blade does not significantly change between the case of the provision of conventional vortex generators and inventive vortex generators. In other words, the lift curve of the soiled rotor blade with inventive vortex generators is approximately identical to the fourth lift curve referring to a soiled rotor blade with conventional vortex generators.

The numbers 551 to 555 refer to the angles of attack where the lift coefficient is maximum, thus where the occurrence of stall is assumed. Additionally, the range of angles of attack between the angle of attack 559 and the angle of attack 558 is referred to as the design area. The design area is understood to be the range of angles of attack where the rotor blade is designed to be operated.

Figure 6B shows the lift to drag ratio for the five lift curves of Figure 6A. Note that a typical drag value for the vortex generators is assumed in order to obtain the lift to drag curves of Figure 6B. In analogy to Figure 6A, a first lift to drag curve 621 refers to a clean rotor blade without vortex generators, a second lift to drag curve 622 refers to a clean rotor blade with conventional vortex generators, a third lift to drag curve 623 refers to a soiled rotor blade without vortex generators, and a fourth lift to drag curve 624 refers to a soiled rotor blade with conventional vortex generators.

Due to the provision of the inventive vortex generators, the following lift to drag curves are obtained:
- For the case of a clean rotor blade with inventive vortex generators, the fifth lift to drag curve 625 is obtained. The fifth lift to drag curve 625 has a high lift to drag value in the design area between the angles of attack 558 and 559.
- For the case of a soiled rotor blade with inventive vortex generators the lift to drag curve coincides substantially with the fourth lift to drag curve 624 representing the soiled rotor blade with conventional vortex generators.

Thus, it can be concluded that by the provision of inventive vortex generators in the case of a clean rotor blade a clear advantage and increase in the lift to drag value at least in the design area of angles of attack is achieved; confer the difference between the fifth lift to drag curve 625 and the second lift to drag curve 622. In the case of a soiled rotor blade, the lift to drag curve with inventive vortex generators is not decreased significantly; thus, it remains substantially on the same level. Consequently, the overall performance of the rotor blade is increased.

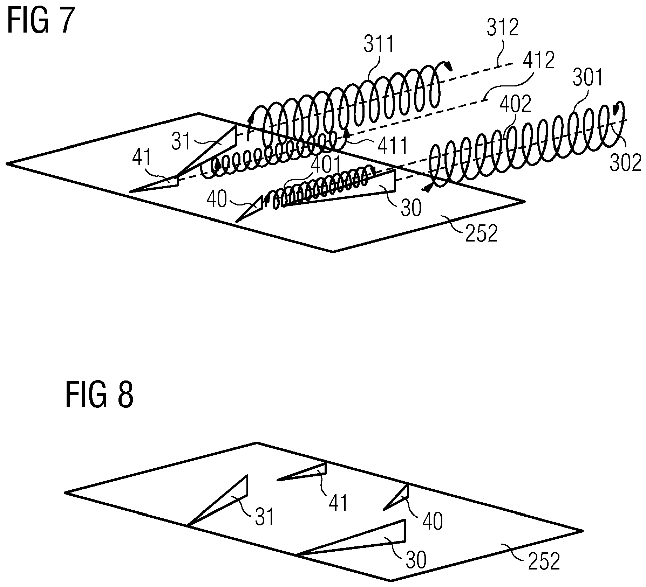

Figures 7 to 11 show five concrete embodiments how a rotor blade with a main vortex generator and a secondary vortex generator could be realized.

Figure 7 shows a first embodiment. A pair of vortex generators comprising a main vortex generator 30 and a further main vortex generator 31 is visualized. The main vortex generator 30 and the further main vortex generator 31 diverge from each other as viewed in the direction of the airflow, i.e. as viewed from the leading edge to the trailing edge, respectively. Additionally, a pair of secondary vortex generators is mounted to the suction side 252 of the rotor blade. The pair of secondary vortex generators comprises a secondary vortex generator 40 and a further secondary vortex generator 41.

Figure 7 shows the vortices that are generated by the vortex generators. Concretely, it is shown that the main vortex generator 30 is able to create a vortex, i.e. a main vortex 301, which has a specific rotational axis 302. Likewise, the further main vortex generator 31 generates a further main vortex 311 with a rotational axis of the further main vortex 312.

Specifically, the main vortex 301 rotates in clockwise direction, while the further main vortex 311 rotates in counter-clockwise direction (as viewed from the downstream side of the vortex generators in both cases). Thus, it can be stated that the rotational direction of the main vortex 301 and the further main vortex 311 are counter-rotating.

The secondary vortex generator 40 also creates a vortex which is referred to as the second vortex 401 with a rotational axis 402. Likewise, the further secondary vortex generator 41 generates a further second vortex 411 comprising a rotational axis of the further second vortex 412. The further secondary vortex generator 41 and the secondary vortex generator 40 converge to each other relative to the direction of the airflow.

Specifically, the second vortex 401 rotates in counter-clockwise direction, while the further second vortex 411 rotates in clockwise direction (as viewed from the downstream side of the vortex generators in both cases). Thus, it can be stated that the second vortex 401 and the further second vortex 411 counter-rotate relative to each other similar to the main vortex and the further main vortex.

Figure 8 shows a second embodiment of the invention. The second embodiment is, in principal, similar to the first embodiment. It differs by the fact that the pair of secondary vortex generators 40, 41 is located downstream of the pair of main vortex generators 30, 31. However, the canceling or reduction effect of the secondary vortex generators 40, 41 on the vortices generated by the main vortex generators 30, 31 is similar. Thus, also the second embodiment represents a promising approach to reach the objective of the invention.

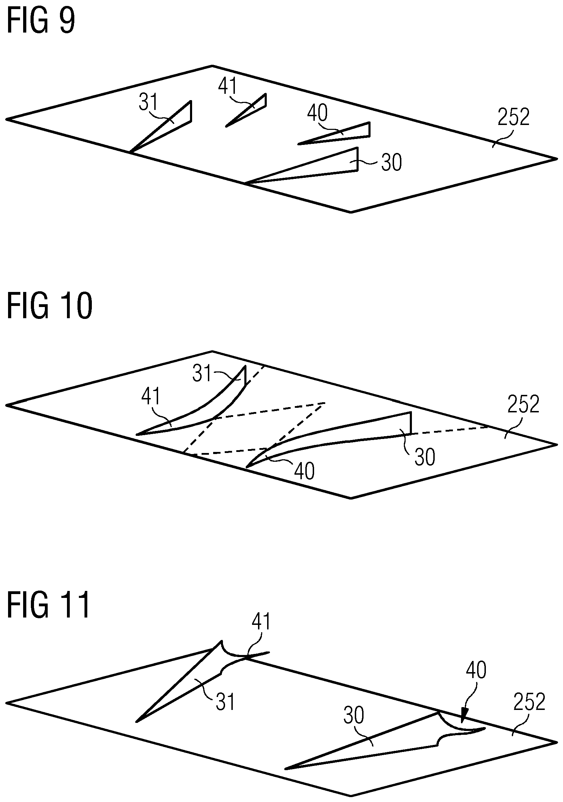

Figure 9 is similar to the second embodiment and represents the third embodiment of the invention. The difference of the third embodiment compared to the second embodiment is that the pair of secondary vortex generators 40, 41 diverge from each other as viewed in the direction of the airflow. It is believed that primarily the secondary vortices of the main vortices generated by the main vortex generators 30, 31 are reduced, or even canceled out, by the second vortices of the secondary vortex generators.

Note that, a vortex generator is not only able to create a vortex, but is also able, in principle, to create a secondary vortex. This is generally valid for any size of the vortex generator, but it is more relevant in the context of this invention for the main vortex generators. Thus, it is believed that the main vortex generators not only generate main vortices, but also secondary vortices.

In the case of the third embodiment as represented in the Figure 9, it is the secondary vortices as generated by the main vortex generators that are in interaction with the second vortices as generated by the secondary vortex generators 40, 41.

In summary, also the embodiment as shown in Figure 9 is able to influence the activity or efficiency of the main vortex generators depending on the thickness of the boundary layer. Thus, also the third embodiment represents a promising way of designing vortex generators of a rotor blade.

Figure 10 represents a fourth embodiment of the invention. The fourth embodiment represents a pair of continuous vortex generators, wherein the secondary vortex generator 40 is converging, i.e. continuing, into the main vortex generator 30. Likewise, this is the case for the further secondary vortex generator 41, converging into the further main vortex generator 31. An advantage of the fourth embodiment is that it only comprises half of the pieces that have to be installed on the surface of the rotor blade and that it has - due to its round shape - no edges and rims or the like, where vortices or other turbulences may be created.

Finally, Figure 11 shows a fifth embodiment of the invention. In this case, also a continuous vortex generator arrangement is provided. The secondary vortex generators 40, 41 are shaped as a vortex deflector pushing the vortices away from the surface of the rotor blade. This consequently also leads to a re-energization of the boundary layer. The key feature of the fifth embodiment is that, in contrast to the state of the art, this vortex deflector 40, 41 is also heavily dependent with respect to its efficiency or activity on the thickness of the boundary layer.

Thus, also the fifth embodiment is able to significantly change the lift to drag ratio in the case of a clean rotor blade, but to leave the lift to drag value of the rotor blade at the same level compared to conventional vortex generators if the a surface portion is soiled.

## Claims

1. Rotor blade (20) of a wind turbine (10),
wherein the rotor blade (20) comprises
- a main vortex generator (30) being configured to generate a main vortex (301), and
- a secondary vortex generator (40) being configured to generate a second vortex (401), wherein
- the height of the main vortex generator (30) is greater than the height of the secondary vortex generator (40),
**characterized in that**
the main vortex generator (30) and the secondary vortex generator (40) are configured and arranged such with regard to each other that
- for a boundary layer thickness (52) being smaller than the height of the secondary vortex generator (40), the secondary vortex generator (40) reduces, in particular neutralizes, the impact of the main vortex generator (30) on the lift of the rotor blade (20), and
- for a boundary layer thickness (52) being larger than the height of the secondary vortex generator (40), the lift of the rotor blade (20) is substantially unaffected by the presence of the secondary vortex generator (40).

2. Rotor blade (20) according to claim 1,
wherein the main vortex generator (30) and the secondary vortex generator (40) are located on the suction side (252) of the rotor blade (20).

3. Rotor blade (20) according to one of the preceding claims,
wherein the main vortex generator (30) and the secondary vortex generator (40) are located substantially at the same spanwise position of the rotor blade (20).

4. Rotor blade (20) according to one of the preceding claims,
wherein the distance between the main vortex generator (30) and the secondary vortex generator (40) is smaller than 10%, in particular smaller than 5%, even more particularly smaller than 2% of the chord length of the rotor blade (20) at the spanwise position of the main vortex generator (30).

5. Rotor blade (20) according to one of the preceding claims,
wherein the main vortex generator (30) is located between 5% and 60% of the chord length of the rotor blade (20), as measured from the leading edge (241) of the rotor blade (20) at the spanwise position of the main vortex generator (30).

6. Rotor blade (20) according to one of the preceding claims,
wherein
- the main vortex generator (30) is located between 50% and 100% of the span (26) of the rotor blade (20), as measured from the root (211) of the rotor blade (20); and
- the main vortex generator (30) is located between 20% and 55% of the chord length of the rotor blade (20), as measured from the leading edge (241) of the rotor blade (20) at the spanwise position of the main vortex generator (30).

7. Rotor blade (20) according to one of the preceding claims,
wherein
- the main vortex generator (30) is located between 5% and 50% of the span (26) of the rotor blade (20), as measured from the root (211) of the rotor blade (20); and
- the main vortex generator (30) is located between 5% and 40% of the chord length of the rotor blade (20), as measured from the leading edge (241) of the rotor blade (20) at the spanwise position of the main vortex generator (30).

8. Rotor blade (20) according to one of the preceding claims,
wherein
- the main vortex generator (30) has a maximum height between 0.2% and 4%, preferably between 0.3% and 1%, of the chord length of the rotor blade (20) at the spanwise position of the main vortex generator (30); and/or
- the secondary vortex generator (30) has a maximum height between 0.1% and 1%, preferably between 0.1% and 0.5%, of the chord length of the rotor blade (20) at the spanwise position of the main vortex generator (30).

9. Rotor blade (20) according to one of the preceding claims,
wherein
- the rotor blade (20) comprises a further main vortex generator (31), thus the main vortex generator (30) and the further main vortex generator (31) build a pair of main vortex generators, and
- the rotor blade (20) comprises a further secondary vortex generator (41), thus the secondary vortex generator (40) and the further secondary vortex generator (41) build a pair of secondary vortex generators.

10. Rotor blade (20) according to claim 9,
wherein the main vortex generator (30) and the further main vortex generator (31) diverge from each other in chordwise direction from the leading edge section (24) of the rotor blade (20) to the trailing edge section (23) of the rotor blade (20).

11. Rotor blade (20) according to claim 9,
wherein the main vortex generator (30) and the further main vortex generator (31) converge to each other in chordwise direction from the leading edge section (24) of the rotor blade (20) to the trailing edge section (23) of the rotor blade (20).

12. Rotor blade (20) according to one of the claims 9 to 11,
wherein the secondary vortex generator (40) and the further secondary vortex generator (41) converge to each other in chordwise direction from the leading edge section (24) of the rotor blade (20) to the trailing edge section (23) of the rotor blade (20).

13. Rotor blade (20) according to one of the claims 9 to 11,
wherein the secondary vortex generator (40) and the further secondary vortex generator (41) diverge from each other in chordwise direction from the leading edge section (24) of the rotor blade (20) to the trailing edge (23) section of the rotor blade (20).

14. Rotor blade (20) according to one of the preceding claims,
wherein the secondary vortex generator (40) is located upstream of the main vortex generator (30).

15. Rotor blade (20) according to one of the preceding claims,
wherein the main vortex generator (30) and the secondary vortex generator (40) merge into one another, such that the main vortex generator (30) and the secondary vortex generator (40) build one single device.

16. Rotor blade (20) according to one of the preceding claims,
wherein the secondary vortex generator (40) is configured as a vortex deflector for guiding the main vortex (301) away from the surface of the rotor blade (20).

17. Wind turbine (10) comprising at least one rotor blade (20) according to one of the preceding claims.

## Patentansprüche

1. Rotorblatt (20) einer Windenergieanlage (10),
wobei das Rotorblatt (20) Folgendes umfasst:
- einen Hauptwirbelgenerator (30), der so konfiguriert ist, dass er einen Hauptwirbel (301) erzeugt, und
- einen zusätzlichen Wirbelgenerator (40), der so konfiguriert ist, dass er einen zweiten Wirbel (401) erzeugt, wobei
- die Höhe des Hauptwirbelgenerators (30) größer ist als die Höhe des zusätzlichen Wirbelgenerators (40),
**dadurch gekennzeichnet, dass**
der Hauptwirbelgenerator (30) und der zusätzliche Wirbelgenerator (40) so konfiguriert und so zueinander angeordnet sind, dass
- der zusätzliche Wirbelgenerator (40) bei einer Grenzschichtdicke (52), die geringer ist als die Höhe des zusätzlichen Wirbelgenerators (40), die Auswirkung des Hauptwirbelgenerators (30) auf den Auftrieb des Rotorblatts (20) reduziert, insbesondere aufhebt, und
- der Auftrieb des Rotorblatts (20) bei einer Grenzschichtdicke (52), die größer ist als die Höhe des zusätzlichen Wirbelgenerators (40), durch das Vorhandensein des zusätzlichen Wirbelgenerators (40) im Wesentlichen nicht beeinflusst wird.

2. Rotorblatt (20) nach Anspruch 1,
bei dem sich der Hauptwirbelgenerator (30) und der zusätzliche Wirbelgenerator (40) auf der Saugseite (252) des Rotorblatts (20) befinden.

3. Rotorblatt (20) nach einem der vorhergehenden Ansprüche, bei dem sich der Hauptwirbelgenerator (30) und der zusätzliche Wirbelgenerator (40) in Längsrichtung des Rotorblatts (20) im Wesentlichen in der gleichen Position befinden.

4. Rotorblatt (20) nach einem der vorhergehenden Ansprüche, bei dem der Abstand zwischen dem Hauptwirbelgenerator (30) und dem zusätzlichen Wirbelgenerator (40) an der Position des Hauptwirbelgenerators (30) in Längsrichtung weniger als 10%, insbesondere weniger als 5%, besonders bevorzugt weniger als 2% der Sehnenlänge des Rotorblatts (20) beträgt.

5. Rotorblatt (20) nach einem der vorhergehenden Ansprüche, bei dem sich der Hauptwirbelgenerator (30) an einer Stelle befindet, die zwischen 5% und 60% der an der Position des Hauptwirbelgenerators (30) in Längsrichtung von der Vorderkante (241) des Rotorblatts (20) aus gemessenen Sehnenlänge des Rotorblatts (20) entspricht.

6. Rotorblatt (20) nach einem der vorhergehenden Ansprüche, bei dem
- sich der Hauptwirbelgenerator (30) an einer Stelle befindet, die zwischen 50% und 100% der von der Wurzel (211) des Rotorblatts (20) aus gemessenen Länge (26) des Rotorblatts (20) entspricht und
- sich der Hauptwirbelgenerator (30) an einer Stelle befindet, die zwischen 20% und 55% der an der Position des Hauptwirbelgenerators (30) in Längsrichtung von der Vorderkante (241) des Rotorblatts (20) aus gemessenen Sehnenlänge des Rotorblatts (20) entspricht.

7. Rotorblatt (20) nach einem der vorhergehenden Ansprüche, bei dem
- sich der Hauptwirbelgenerator (30) an einer Stelle befindet, die zwischen 5% und 50% der von der Wurzel (211) des Rotorblatts (20) aus gemessenen Länge (26) des Rotorblatts (20) entspricht und
- sich der Hauptwirbelgenerator (30) an einer Stelle befindet, die zwischen 5% und 40% der an der Position des Hauptwirbelgenerators (30) in Längsrichtung von der Vorderkante (241) des Rotorblatts (20) aus gemessenen Sehnenlänge des Rotorblatts (20) entspricht.

8. Rotorblatt (20) nach einem der vorhergehenden Ansprüche, bei dem
- der Hauptwirbelgenerator (30) eine maximale Höhe aufweist, die zwischen 0,2% und 4%, vorzugsweise zwischen 0,3% und 1%, der Sehnenlänge des Rotorblatts (20) an der Position des Hauptwirbelgenerators (30) in Längsrichtung entspricht, und/oder
- der zusätzliche Wirbelgenerator (30) eine maximale Höhe aufweist, die zwischen 0,1% und 1%, vorzugsweise zwischen 0,1% und 0,5%, der Sehnenlänge des Rotorblatts (20) an der Position des Hauptwirbelgenerators (30) in Längsrichtung entspricht.

9. Rotorblatt (20) nach einem der vorhergehenden Ansprüche, wobei
- das Rotorblatt (20) einen weiteren Hauptwirbelgenerator (31) umfasst, so dass der Hauptwirbelgenerator (30) und der weitere Hauptwirbelgenerator (31) ein Paar Hauptwirbelgeneratoren bilden, und
- das Rotorblatt (20) einen weiteren zusätzlichen Wirbelgenerator (41) umfasst, so dass der zusätzliche Wirbelgenerator (40) und der weitere zusätzliche Wirbelgenerator (41) ein Paar zusätzliche Wirbelgeneratoren bilden.

10. Rotorblatt (20) nach Anspruch 9,
bei dem der Hauptwirbelgenerator (30) und der weitere Hauptwirbelgenerator (31) in Sehnenrichtung von dem Vorderkantenabschnitt (24) des Rotorblatts (20) aus zum Hinterkantenabschnitt (23) des Rotorblatts (20) hin auseinanderlaufen.

11. Rotorblatt (20) nach Anspruch 9,
bei dem der Hauptwirbelgenerator (30) und der weitere Hauptwirbelgenerator (31) in Sehnenrichtung von dem Vorderkantenabschnitt (24) des Rotorblatts (20) aus zum Hinterkantenabschnitt (23) des Rotorblatts (20) hin zusammenlaufen.

12. Rotorblatt (20) nach einem der Ansprüche 9 bis 11,
bei dem der zusätzliche Wirbelgenerator (40) und der weitere zusätzliche Wirbelgenerator (41) in Sehnenrichtung von dem Vorderkantenabschnitt (24) des Rotorblatts (20) aus zum Hinterkantenabschnitt (23) des Rotorblatts (20) hin zusammenlaufen.

13. Rotorblatt (20) nach einem der Ansprüche 9 bis 11,
bei dem der zusätzliche Wirbelgenerator (40) und der weitere zusätzliche Wirbelgenerator (41) in Sehnenrichtung von dem Vorderkantenabschnitt (24) des Rotorblatts (20) aus zum Hinterkantenabschnitt (23) des Rotorblatts (20) hin auseinanderlaufen.

14. Rotorblatt (20) nach einem der vorhergehenden Ansprüche,
bei dem sich der zusätzliche Wirbelgenerator (40) in Strömungsrichtung vor dem Hauptwirbelgenerator (30) befindet.

15. Rotorblatt (20) nach einem der vorhergehenden Ansprüche,
bei dem der Hauptwirbelgenerator (30) und der zusätzliche Wirbelgenerator (40) so ineinander übergehen, dass der Hauptwirbelgenerator (30) und der zusätzliche Wirbelgenerator (40) eine einzige Vorrichtung bilden.

16. Rotorblatt (20) nach einem der vorhergehenden Ansprüche,
bei dem der zusätzliche Wirbelgenerator (40) als Wirbelleitvorrichtung zum Wegleiten des Hauptwirbels (301) von der Oberfläche des Rotorblatts (20) konfiguriert ist.

17. Windenergieanlage (10) mit mindestens einem Rotorblatt (20) nach einem der vorhergehenden Ansprüche.

## Revendications

1. Pale de rotor (20) d'éolienne (10),
la pale de rotor (20) comprenant :
- un générateur de tourbillon principal (30) conçu pour produire un tourbillon principal (301), et
- un générateur de tourbillon secondaire (40) conçu pour produire un second tourbillon (401), dans laquelle :
- la hauteur du générateur de tourbillon principal (30) est supérieure à la hauteur du générateur de tourbillon secondaire (40),
**caractérisée en ce que** :
le générateur de tourbillon principal (30) et le générateur de tourbillon secondaire (40) sont conçus et agencés de telle manière l'un par rapport à l'autre que :
- pour une épaisseur de couche limite (52) inférieure à la hauteur du générateur de tourbillon secondaire (40), le générateur de tourbillon secondaire (40) réduit, en particulier neutralise, l'impact du générateur de tourbillon principal (30) sur la portance de la pale de rotor (20), et
- pour une épaisseur de couche limite (52) supérieure à la hauteur du générateur de tourbillon secondaire (40), la portance de la pale de rotor (20) n'est sensiblement pas affectée par la présence du générateur de tourbillon secondaire (40).

2. Pale de rotor (20) selon la revendication 1,
dans laquelle le générateur de tourbillon principal (30) et le générateur de tourbillon secondaire (40) se situent du côté aspiration (252) de la pale de rotor (20).

3. Pale de rotor (20) selon l'une des revendications précédentes, dans laquelle le générateur de tourbillon principal (30) et le générateur de tourbillon secondaire (40) se situent sensiblement à la même position de la pale de rotor (20) dans le sens de l'envergure.

4. Pale de rotor (20) selon l'une des revendications précédentes,
dans laquelle la distance entre le générateur de tourbillon principal (30) et le générateur de tourbillon secondaire (40) est inférieure à 10 %, en particulier inférieure à 5 %, plus particulièrement inférieure à 2 % de la longueur de la corde de la pale de rotor (20), à la position du générateur de tourbillon principal (30) dans le sens de l'envergure.

5. Pale de rotor (20) selon l'une des revendications précédentes, dans laquelle le générateur de tourbillon principal (30) se situe entre 5 % et 60 % de la longueur de la corde de la pale de rotor (20), telle que mesurée depuis le bord d'attaque (241) de la pale de rotor (20), à la position du générateur de tourbillon principal (30) dans le sens de l'envergure.

6. Pale de rotor (20) selon l'une des revendications précédentes, dans laquelle :
- le générateur de tourbillon principal (30) se situe entre 50 % et 100 % de l'envergure (26) de la pale de rotor (20), telle que mesurée depuis la racine (211) de la pale de rotor (20) ; et
- le générateur de tourbillon principal (30) se situe entre 20 % et 55 % de la longueur de la corde de la pale de rotor (20), telle que mesurée depuis le bord d'attaque (241) de la pale de rotor (20), à la position du générateur de tourbillon principal (30) dans le sens de l'envergure.

7. Pale de rotor (20) selon l'une des revendications précédentes, dans laquelle :
- le générateur de tourbillon principal (30) se situe entre 5 % et 50 % de l'envergure (26) de la pale de rotor (20), telle que mesurée depuis la racine (211) de la pale de rotor (20) ; et
- le générateur de tourbillon principal (30) se situe entre 5 % et 40 % de la longueur de la corde de la pale de rotor (20), telle que mesurée depuis le bord d'attaque (241) de la pale de rotor (20), à la position du générateur de tourbillon principal (30) dans le sens de l'envergure.

8. Pale de rotor (20) selon l'une des revendications précédentes, dans laquelle :
- le générateur de tourbillon principal (30) a une hauteur maximale comprise entre 0,2 % et 4 %, de préférence entre 0,3 % et 1 % de la longueur de la corde de la pale de rotor (20) à la position du générateur de tourbillon principal (30) dans le sens de l'envergure ; et/ou
- le générateur de tourbillon secondaire (40) a une hauteur maximale comprise entre 0,1 % et 1 %, de préférence entre 0,1 % et 0,5 % de la longueur de la corde de la pale de rotor (20) à la position du générateur de tourbillon principal (30) dans le sens de l'envergure.

9. Pale de rotor (20) selon l'une des revendications précédentes, dans laquelle :
- la pale de rotor (20) comprend un générateur de tourbillon principal supplémentaire (31), de sorte que le générateur de tourbillon principal (30) et le générateur de tourbillon principal supplémentaire (31) constituent une paire de générateurs de tourbillons principaux, et
- la pale de rotor (20) comprend un générateur de tourbillon secondaire supplémentaire (41), de sorte que le générateur de tourbillon secondaire (40) et le générateur de tourbillon secondaire supplémentaire (41) constituent une paire de générateurs de tourbillons secondaires.

10. Pale de rotor (20) selon la revendication 9,
dans laquelle le générateur de tourbillon principal (30) et le générateur de tourbillon principal supplémentaire (31) divergent l'un de l'autre dans la direction de la corde, de la section de bord d'attaque (24) de la pale de rotor (20) à la section de bord de fuite (23) de la pale de rotor (20).

11. Pale de rotor (20) selon la revendication 9,
dans laquelle le générateur de tourbillon principal (30) et le générateur de tourbillon principal supplémentaire (31) convergent l'un vers l'autre dans la direction de la corde, de la section de bord d'attaque (24) de la pale de rotor (20) à la section de bord de fuite (23) de la pale de rotor (20).

12. Pale de rotor (20) selon l'une des revendications 9 à 11,
dans laquelle le générateur de tourbillon secondaire (40) et le générateur de tourbillon secondaire supplémentaire (41) convergent l'un vers l'autre dans la direction de la corde, de la section de bord d'attaque (24) de la pale de rotor (20) à la section de bord de fuite (23) de la pale de rotor (20).

13. Pale de rotor (20) selon l'une des revendications 9 à 11,
dans laquelle le générateur de tourbillon secondaire (40) et le générateur de tourbillon secondaire supplémentaire (41) divergent l'un de l'autre dans la direction de la corde, de la section de bord d'attaque (24) de la pale de rotor (20) à la section de bord de fuite (23) de la pale de rotor (20).

14. Pale de rotor (20) selon l'une des revendications précédentes,
dans laquelle le générateur de tourbillon secondaire (40) se situe en amont du générateur de tourbillon principal (30).

15. Pale de rotor (20) selon l'une des revendications précédentes,
dans laquelle le générateur de tourbillon principal (30) et le générateur de tourbillon secondaire (40) fusionnent l'un avec l'autre, de sorte que le générateur de tourbillon principal (30) et le générateur de tourbillon secondaire (40) constituent un seul dispositif.

16. Pale de rotor (20) selon l'une des revendications précédentes,
dans laquelle le générateur de tourbillon secondaire (40) est conçu comme un déflecteur de tourbillon destiné à guider le tourbillon principal (301) à l'écart de la surface de la pale de rotor (20).

17. Éolienne (10) comprenant au moins une pale de rotor (20) selon l'une des revendications précédentes.
